(19)

Europäisches
Patentamt
European
Patent Office
Office européen
des brevets

(11)  EP 2 891 866 B1

(12)  EUROPEAN PATENT SPECIFICATION

(45) Date of publication and mention
of the grant of the patent:
**08.04.2020  Bulletin 2020/15**

(21) Application number: **13832821.6**

(22) Date of filing: **30.07.2013**

(51) Int Cl.:
***G01B 21/20*** *(2006.01)*          ***G01M 13/04*** *(2019.01)*
***G01B 5/20*** *(2006.01)*

(86) International application number:
**PCT/JP2013/070651**

(87) International publication number:
**WO 2014/034362 (06.03.2014 Gazette 2014/10)**

(54) **BEARING TRACK GROOVE MEASUREMENT DEVICE AND BEARING TRACK GROOVE MEASUREMENT METHOD**

LAGERSPURRILLENMESSVORRICHTUNG UND LAGERSPURRILLENMESSVERFAHREN

DISPOSITIF DE MESURE DE GORGE DE PISTE DE ROULEMENT ET PROCÉDÉ DE MESURE DE GORGE DE PISTE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.08.2012  JP 2012190242**

(43) Date of publication of application:
**08.07.2015  Bulletin 2015/28**

(73) Proprietor: **NTN Corporation
Osaka-shi, Osaka 550-0003 (JP)**

(72) Inventor: **HATTORI, Yuichi
Iwata-shi, Shizuoka 438-0037 (JP)**

(74) Representative: **Eder, Christian
Eder Schieschke & Partner mbB
Patentanwälte
Elisabethstrasse 34/II
80796 München (DE)**

(56) References cited:
**EP-A1- 1 193 464          WO-A1-97/12201
CH-A5- 590 452          JP-A- H02 284 017
JP-A- H02 284 017          JP-A- H07 167 790
JP-A- 2002 098 517          JP-B2- 2 992 625**

**Description**

Technical Field

The present invention relates to a bearing track groove measurement device and a bearing track groove measurement method.

Background Art

Abearing generally includes, as main components thereof, an inner race having an inner raceway surface (bearing track groove) formed in a radially outer surface thereof, an outer race having an outer raceway surface (bearing track groove) formed in a radially inner surface thereof, a plurality of balls interposed between the inner raceway surface of the inner race and the outer raceway surface of the outer race in a freely rollable manner, and a retainer arranged between the inner race and the outer race so as to retain the balls equiangularly.

Thus, the bearing track grooves on which the balls roll need to be processed with high precision. It is therefore necessary to measure a cross-sectional profile of the bearing track groove. For measuring the cross-sectional profile of the bearing track groove, for example, a profile measurement device as disclosed in Patent Literature 1 may be used.

The profile measurement device disclosed in Patent Literature 1 is configured so that a probe supported so as to be freely movable in an X-axis direction and a Z-axis direction is moved along a surface of an object to be measured.

JP02284017 discloses a shape measuring instrument for measuring the waviness of a concave arcuate surface or concave hemispherical surface without breaking the object of the measurement.

Citation List

Patent Literature 1: JP 2992625 B2

Summary of Invention

Technical Problems

However, when a measurement method in which the probe is moved along two axial directions of the X axis and the Z axis is used to measure a profile having a rounded bottom surface as exemplified by the bearing track groove, a large load is applied to the probe so that highly-precise measurement cannot be performed. Besides, in the case where a member to be measured (workpiece) is an inner race or an outer race of a large-sized bearing, a measurement stroke is increased to increase the size and cost of the measurement device. Further, in the case of such an even larger workpiece that cannot be mounted to the measurement device, it is necessary to perform destructive inspection involving the cutting of the workpiece.

It is therefore an object of the present invention to provide a bearing track groove measurement device and a bearing track groove measurement method, which are capable of performing highly-precise measurement and are capable of performing measurement without destructive inspection even when a workpiece is an inner race or an outer race of a large-sized bearing.

Solution to Problems

The invention is defined in the independent claims. Embodiments of the invention are set out in the dependent claims.

According to one embodiment of the present invention, there is provided a bearing track groove measurement device, comprising: a displacement sensor for detecting, by turning about a groove center of a cross-section of a bearing track groove, a radius value corresponding to a dimension from a turning center thereof to a groove bottom surface; turning angle detection means for detecting a turning angle of the displacement sensor; and calculation means for calculating a profile waveform of the bearing track groove based on the radius value detected by the displacement sensor and the turning angle at the radius value, which is detected by the turning angle detection means.

According to one embodiment of the present invention, there is provided a bearing track groove measurement method for measuring a cross-sectional profile of a bearing track groove, comprising: a radius detection step of detecting, by a displacement sensor for turning about a groove center of a cross-section of the bearing track groove, a radius value corresponding to a dimension from a turning center thereof to a groove bottom surface; a turning angle detection step of detecting a turning angle at the radius value detected by the displacement sensor; and a calculation step of calculating a profile waveform of the bearing track groove based on the radius value detected by the displacement sensor and the turning angle at the radius value, which is detected in the turning angle detection means.

According to one embodiment of the present invention, while the displacement sensor is turned about the groove center of the cross-section of the bearing track groove, the radius value corresponding to the dimension from the turning center to the groove bottom surface may be detected. In this way, the radius values of the entire cross-sectional profile of the bearing track groove may be determined. Further, the turning angle at each of the radius values may be detected. Consequently, the profile waveform of the bearing track groove may be calculated based on the radius value and the turning angle. Besides, it is unnecessary to move a probe along two axial directions, and hence the load on the displacement sensor may be suppressed to be small.

The bearing track groove measurement device further comprises fixing means for fixing a workpiece having the bearing track groove. The fixing means comprises a clamp mechanism for clamping the workpiece by adjusting a clamp width in a state in which the workpiece is fixed at a predetermined placement position. According to the bearing track groove measurement device comprising the clamp mechanism, it is unnecessary to set the workpiece in the measurement device, but the measurement device may be mounted on the workpiece through the adjustment of the clamp width of the clamp mechanism. In other words, it is unnecessary to move the workpiece itself, and hence the profile waveform of the bearing track groove may be calculated even for a large-sized workpiece that is difficult to move.

Further, the bearing track groove measurement device may further comprise positioning means for positioning the displacement sensor. The positioning means may comprise a groove fitting element to be fitted into the bearing track groove. The bearing track groove measurement device may further comprise a floating structure capable of displacing the groove fitting element in a vertical direction.

The floating structure may be constructed by a spring member or an actuator mechanism. In this case, the actuator is configured to convert input energy into a physical motion, and is a mechanical element constructing a mechanical/electrical circuit. The actuator is actively activated or driven. Further, the actuator is a drive device for moving an object and a mechanical or hydraulic/pneumatic device for performing control in response to the operation of the drive device. The types of actuator include an actuating cylinder (hydraulic cylinder, pneumatic cylinder, and electric cylinder), a linear actuator (reciprocating drive device with a linear motor), and a rubber actuator (reciprocating drive device utilizing deformation of rubber tube caused by pressurization and depressurization).

The groove fitting element may comprise a steel ball. By using the steel ball in this manner, the groove fitting element may be stably fitted into the bearing track groove.

The workpiece having the track groove may have the track groove formed in a radially inner surface thereof and the groove fitting element may be configured to be fitted into the track groove from a radially inner side of the workpiece, or the workpiece having the track groove may have the track groove formed in a radially outer surface thereof and the groove fitting element may be configured to be fitted into the track groove from a radially outer side of the workpiece.

Further, the cross-sectional profile of the bearing track groove may have a single circular profile, a Gothic circular profile, or a double curvature circular profile.

The calculation means may calculate, for the cross-sectional profile of the bearing track groove, a radius value of the groove and groove center coordinates by circular approximation with use of a least squares method. Further, the calculation means may create a virtual circle that contacts with Gothic circles at two points based on the calculated radius value of the bearing track groove and the calculated groove center coordinates. In addition, the calculation means may calculate an angle formed by contact points of the Gothic circles and the virtual circle and means may calculate a distance formed by contact points of the Gothic circles and the virtual circle.

The bearing track groove measurement device may comprise relationship calibration means for the turning center and a detection value of the displacement sensor. In this case, a groove profile model or a planar model may be used as the relationship calibration means.

An electric micrometer or a laser displacement sensor may be used as the displacement sensor. The electric micrometer is a comparator for measuring a minute displacement by converting the minute displacement into an electrical amount with use of a detector including a contact probe. A circuit element, such as an electrical resistance as an electrical impedance, an electrical capacitance, or electromagnetic induction, is connected so as to change in response to displacement, and a change in current or voltage generated in the circuit is utilized. The laser displacement sensor is constructed by a combination of a light emitting element and a light receiving element, and a semiconductor laser is used as the light emitting element. Light from the semiconductor laser is condensed through a transmitter lens to irradiate a measurement target. Then, a part of light beams diffracted and reflected from the target passes through a receiver lens to form a spot on the light receiving element. The spot moves along with the movement of the target, and hence by detecting the position of the spot, a displacement amount to the target may be known.

Advantageous Effects of Invention

According to one embodiment of the present invention, the profile waveform of the bearing track groove may be calculated based on the radius value and the turning angle, and besides, the load on the displacement sensor may be suppressed to be small. Consequently, the profile of the bearing track groove may be measured with high precision.

According to the bearing track groove measurement device comprising the fixing means comprising the clamp mechanism, the workpiece may be clamped through the adjustment of the clamp width in a state in which the workpiece is fixed at a predetermined placement position, which eliminates the need of moving the workpiece. Consequently, the profile of the bearing track groove may be stably measured with high precision even for a large-sized workpiece that is difficult to move.

According to the bearing track groove measurement device comprising the groove fitting element as the fixing means, when the groove fitting element is fitted into the bearing track groove, the sensor may be stably positioned to perform more highly-precise measurement.

According to the bearing track groove measurement device comprising the floating structure capable of displacing the groove fitting element in the vertical direction, the groove fitting element is stably fitted into the bearing track groove. The floating structure may be constructed by a spring member or an actuator mechanism, and hence the degree of freedom of design of the device is increased to realize a device that is easy to design.

When the groove fitting element is constructed by the steel ball, the groove fitting element may be stably fitted into the bearing track groove, and more precise positioning may be performed. Besides, the steel ball is excellent in strength and rigidity and may be used for a long time, which may reduce the cost.

The workpiece may be an outer race having a track groove formed in a radially inner surface thereof or an inner race having a track groove formed in a radially outer surface thereof. Further, the track groove may have a single circular profile, a Gothic circular profile, or a double curvature circular profile. In this way, the bearing track groove measurement device is adaptable to various kinds of workpiece.

According to the bearing track groove measurement device comprising the relationship calibration means, more highly-precise measurement may be performed. Besides, the general versatility is excellent because a groove profile model or a planar model may be used as the relationship calibration means.

The electric micrometer employs a method of electrically magnifying a mechanical minute displacement, and hence the use of the electric micrometer as a detection sensor enables precise measurement with excellent responsiveness, and may reduce the cost as well. Further, because the laser displacement sensor is a non-contact sensor, the use of the laser displacement sensor as a detection sensor may effectively prevent the workpiece from being scratched in measurement.

Brief Description of Drawings

FIG. 1 is a simplified block diagram of a bearing track groove measurement device according to an embodiment of the present invention.

FIG. 2 is a simplified cross-sectional view of a main part of the bearing track groove measurement device illustrated in FIG. 1.

FIG. 3 is a simplified side view of a main part of the bearing track groove measurement device illustrated in FIG. 1.

FIG. 4 is a simplified view illustrating a relationship between a displacement sensor of the bearing track groove measurement device illustrated in FIG. 1 and a track groove.

FIG. 5 is a simplified view illustrating a virtual circle of a steel ball in use.

FIG. 6 is a graph showing a relationship between a radial position of a groove bottom of the bearing track groove and a turning angle.

FIG. 7 is a profile waveform diagram of a bearing track groove. FIG. 8 is an explanatory diagram of a Gothic amount, a contact point, and a contact angle.

FIG. 9 is an explanatory diagram of the Gothic amount, the contact point, and the contact angle.

FIG. 10 is a perspective view illustrating a groove profile model.

FIG. 11 is a cross-sectional view of a bearing that uses an inner race and an outer race measured with use of the bearing track groove measurement device according to the embodiment of the present invention.

FIG. 12 is a simplified cross-sectional view of a bearing subjected to groove measurement by the bearing track groove measurement device illustrated in FIG. 1 and others.

Description of Embodiment

Now, an embodiment of the present invention is described with reference to the drawings.

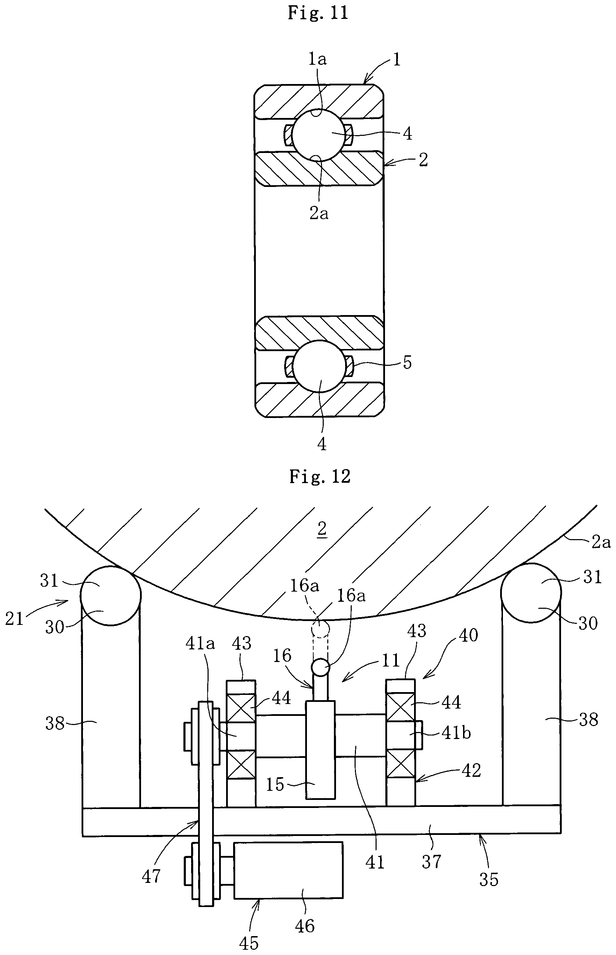

FIG. 11 illustrates a bearing (ball bearing) subjected to groove measurement by a bearing track groove measurement device according to the present invention. The bearing comprises, as main components thereof, an outer race 1 having an outer raceway surface (track groove) 1a formed in a radially inner surface thereof, an inner race 2 having an inner raceway surface 2a, formed in a radially outer surface thereof, a plurality of balls 4 serving as rolling elements, which are interposed between the inner raceway surface 2a of the inner race 2 and the outer raceway surface 1a of the outer race 1 in a freely rollable manner, and a retainer 5 arranged between the inner race 2 and the outer race 1 so as to retain the balls 4 equiangularly.

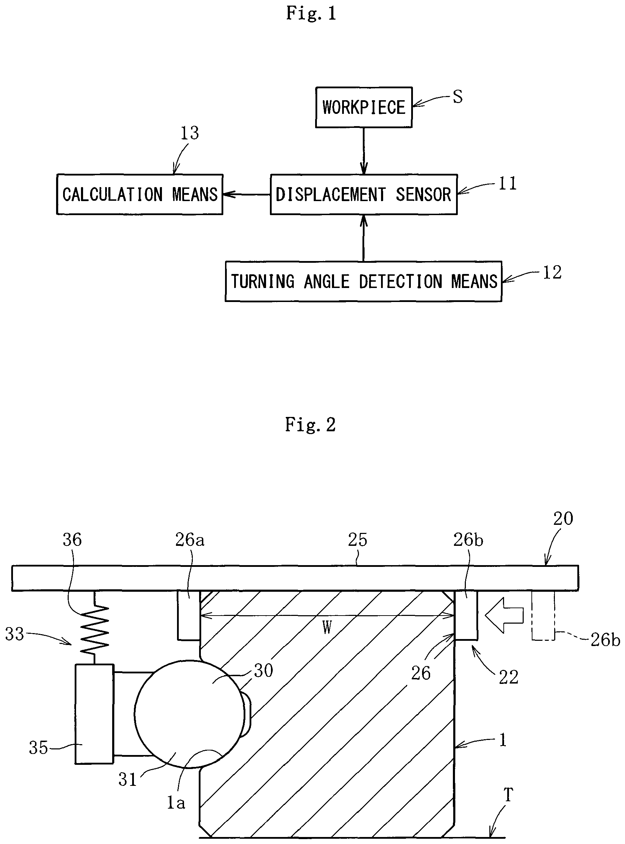

As illustrated in FIG. 1, the bearing track groove measurement device comprises a displacement sensor 11 for detecting, by turning around a groove center of a cross-section of the bearing track groove 1a of the outer race 1 as a workpiece S, a radius value corresponding to a dimension from the turning center to a groove bottom surface, turning angle detection means 12 for detecting a turning angle (turning angle of displacement sensor 11) at the radius value detected by the displacement sensor 11, and calculation means 13 for calculating a profile waveform of the bearing track groove based on the radius value detected by the displacement sensor and the turning angle at the radius value detected by the turning angle detection means 12.

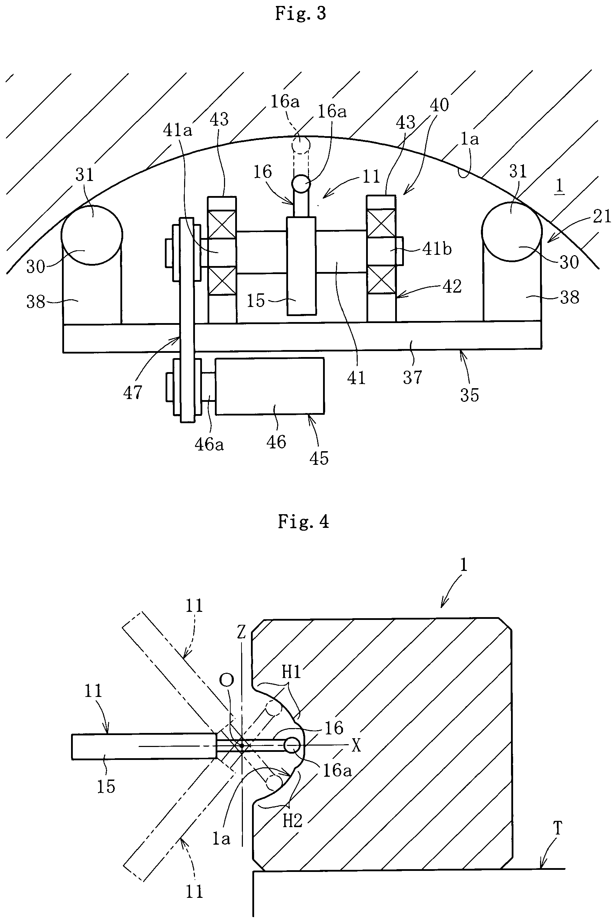

The displacement sensor 11 may be constructed by, for example, an electric micrometer that uses a differential transformer including three coils and a movable iron core. Specifically, as illustrated in FIG. 4, the displacement sensor 11 comprises a detector main body 15 having the differential transformer accommodated therein and a detection spindle 16 that protrudes from the detector main body 15. In the differential transformer, when a primary coil is energized with AC (constant frequency voltage), induced voltages are generated in secondary coils by the movable iron core that moves in conjunction with the detection spindle 16 having a probe 16a held in contact with the track groove 1a of the object to be measured (workpiece). The induced voltages are differentially coupled to each other and extracted as a voltage difference. In this way, displacement is output.

Incidentally, the bearing track groove measurement device is configured to measure the profile of the bearing track groove 1a of the outer race 1. Thus, the bearing track groove measurement device comprises fixing means 20 (see FIG. 2) for fixing the workpiece S (outer race 1) and positioning means 21 (see FIG. 3) for positioning the displacement sensor 11.

The fixing means 20 comprises a clamp mechanism 22 for clamping the workpiece S (outer race 1) by adjusting a clamp width W in the state in which the workpiece S is fixed at a predetermined placement position. Specifically, the clamp mechanism 22 comprises a substrate 25 and a clamp member 26 mounted on a lower surface of the substrate 25. The clamp member 26 comprises a pair of gripping pieces 26a and 26b. One gripping piece 26a is fixed on the substrate 25, and the other gripping piece 26b is retained by the substrate 25 so as to approach or separate from the one gripping piece 26a via a drive mechanism (not shown). Note that, various kinds of reciprocating mechanisms, such as a cylinder mechanism, a bolt-nut mechanism, and a linear guide mechanism, may be used as the drive mechanism for the gripping piece 26b.

In this case, as illustrated in FIG. 2, under the state in which the substrate 25 is placed on the workpiece S (outer race 1) that is placed and fixed on a placement table T, the other gripping piece 26b approaches the one gripping piece 26a to enable the outer race 1 to be clamped.

Further, the positioning means 21 comprises a pair of fitting elements 30 and 30 to be fitted into the track groove 1a of the outer race 1. In this case, a steel ball 31 is used as the groove fitting element 30, and the steel ball 31 is hung down from the substrate 25 through intermediation of a floating structure 33 (see FIG. 2) capable of displacing the steel ball 31 in the vertical direction.

The floating structure 33 comprises a spring member 36 for retaining a support member 35 that supports the steel ball 31. As illustrated in FIG. 3, the support member 35 comprises a substrate portion 37 and steel ball support portions 38 that protrude from the substrate portion 37.

Further, the support member 35 is provided with support means 40 for supporting the displacement sensor 11. The support means 40 comprises a rotational shaft 41 and a pivotally supporting mechanism 42 for supporting the rotational shaft 41 in a freely rotatable manner. The pivotally supporting mechanism 42 comprises a pair of leg portions 43 that protrudes from the substrate portion 37 of the support member 35. Bearings 44 and 44 are provided to the respective leg portions 43 and 43. End portions 41a and 41b of the rotational shaft 41 are pivotally supported by the bearings 44 and 44. Accordingly, the rotational shaft 41 rotates about its axial center.

Further, the rotational shaft 41 rotates about its axial center via a rotational drive mechanism 45. The rotational drive mechanism 45 comprises a motor (servo motor) 46 serving as a drive source. An output shaft 46a of the motor 46 and one end portion 41a of the rotational shaft 41 are coupled to each other by an interlocking mechanism 47. As the interlocking mechanism 47, for example, a belt mechanism as exemplified in FIG. 3 is used.

In this case, when the motor 46 of the rotational drive mechanism 45 is driven under the state in which the steel balls 31 are fitted into the track groove 1a as illustrated in FIGS. 2, 3, and others, the sensor 11 turns about the center O of the cross-section of the track groove 1a as illustrated in FIG. 4. Then, this turning angle is detected by the turning angle detection means 12. In this case, an encoder may be used as the turning angle detection means 12. Note that, the types of encoder include an incremental encoder and an absolute encoder, and any type of encoder may be used as the turning angle detection means 12.

The calculation means 13 may be constructed by, for example, a microcomputer or the like in which a read only memory (ROM), a random access memory (RAM), and the like are interconnected via a bus around a central processing unit (CPU).

Next, a track groove profile measurement method using the device configured as described above is described. First, as illustrated in FIGS. 2 and 3, this device is mounted on the outer race 1 that is placed and fixed on the placement table T. Specifically, as indicated by the virtual line of FIG. 2, the substrate 25 is placed on the outer race 1 under the state in which the interval between the gripping pieces 26a and 26b of the clamp member 26 of the clamp mechanism 22 is increased.

After that, the clamp width W is reduced. Specifically, the gripping piece 26b is brought closer to the gripping piece 26a as indicated by the arrow. In this way, the outer race 1 is clamped by the clamp mechanism 22. At this time, the steel balls 31 for positioning are fitted into the track groove 1a. Then, in this state, the sensor 11 turns about the center O of the track groove 1a as illustrated in FIG. 4.

This turning enables the sensor 11 (electric micrometer) to detect the radius value corresponding to the dimension from the turning center of the track groove 1a in the cross-section to the groove bottom surface. At this time, the turning angle of the sensor 11 is also detected by the encoder serving as the turning angle detection means 12.

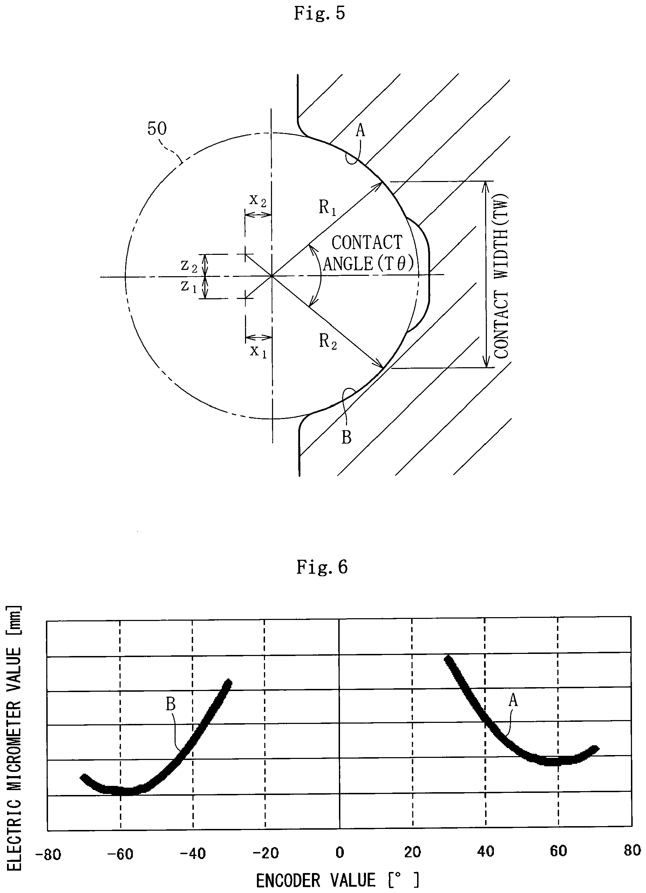

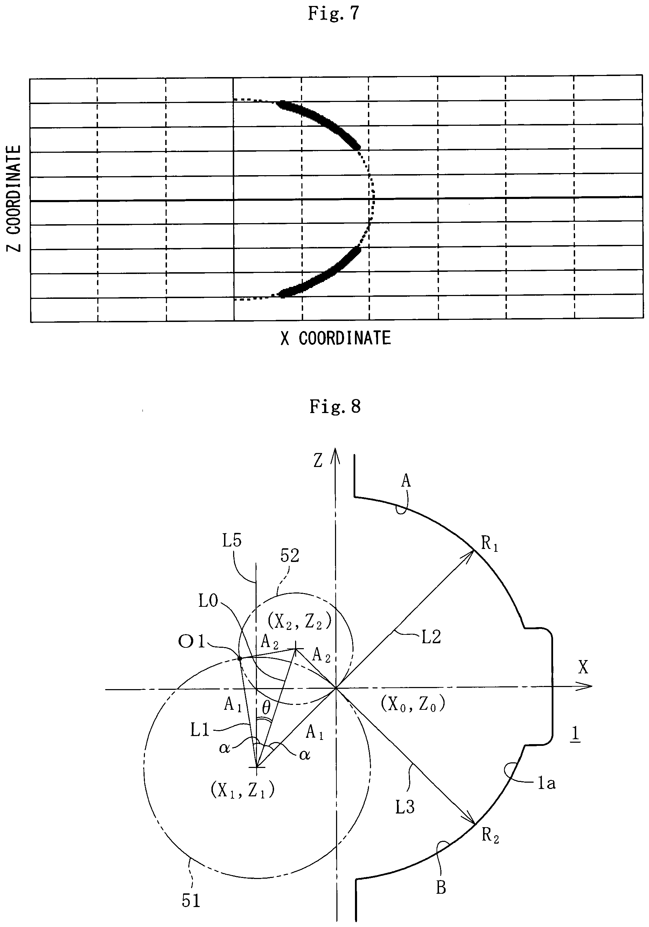

Specifically, the electric micrometer value and the encoder value may be determined as shown in FIG. 6. In FIG. 6, the waveform A is a cross-sectional waveform in the range H2 in the clockwise direction with respect to the X axis in FIG. 4, and the waveform B is a cross-sectional waveform in the range H1 in the counterclockwise direction with respect to the X axis in FIG. 4. When the waveforms shown in FIG. 6 are converted into an X-Z orthogonal coordinate system, a Gothic groove contour profile waveform as shown in FIG. 7 may be obtained. The X-coordinate value is expressed by Math. 1, and the Z-coordinate value is expressed by Math. 2.

[Math. 1]

$$X = (\alpha + R)\cos\theta$$

$\alpha$ : calibration value
$R$ : electric micrometer value
$\theta$ : encoder value

[Math. 2]

$$Z = (\alpha + R)\sin\theta$$

$\alpha$ : calibration value
$R$ : electric micrometer value
$\theta$ : encoder value

In Math. 1 and 2, $\alpha$ represents a calibration value, R represents an electric micrometer value, and $\theta$ represents an encoder value. For the obtained Gothic groove contour profile waveform, the radii and the center coordinates of the respective Gothic circles may be calculated by the least squares method. Then, a virtual circle 50 of the steel ball in use may be created based on those values as illustrated in FIG. 5. In this way, a Gothic amount, a contact width (TW), a contact angle (T$\theta$), and the like may be calculated.

Specifically, as illustrated in FIG. 8, when the center coordinates of a first groove A are represented by $(X_1, Z_1)$, the center coordinates of a second groove B are represented by $(X_2, Z_3)$, the radius of the first groove A is represented by $R_1$, the radius of the second groove B is represented by $R_2$, the center coordinates of the steel ball are represented by $(X_0, Z_0)$, and the radius of the steel ball is represented by $R_0$, the dimension $A_1$ from $(X_0, Z_0)$ to the center coordinates $(X_1, Z_1)$ of the first groove A is expressed by Math. 3, and the dimension $A_2$ from $(X_0, Z_0)$ to the center coordinates $(X_2, Z_2)$ of the second groove B is expressed by Math. 4.

[Math. 3]

$$A_1 = R_1 - R_0$$

$R_0$ : radius of steel ball

$R_1$ : radius of first groove A

[Math. 4]

$$A_2 = R_2 - R_0$$

$R_0$ : radius of steel ball

$R_2$ : radius of second groove B

Further, when the dimension between the coordinates $(X_1, Z_1)$ and the coordinates $(X_2, Z_2)$ is represented by L, the dimension L is expressed by Math. 5. When a circle 51 centered at the coordinates $(X_1, Z_1)$ and passing through the coordinates $(X_0, Z_0)$ and a circle 52 centered at the coordinates $(X_2, Z_2)$ and passing through the coordinates $(X_0, Z_0)$ are drawn, the angle $\alpha$ formed by the segment L1 connecting the intersection O1 between the circle 51 and the circle 52 and the coordinates $(X_1, Z_1)$ and the segment L0, that is, the angle formed by the segment L1 and the segment L2 connecting the coordinates $(X_1, Z_1)$ and the coordinates $(X_0, Z_0)$ is expressed by Math. 6.

[Math. 5]

$$L = \sqrt{(x_1 - x_2)^2 + (z_1 - z_2)^2}$$

$x_1$ : center coordinate of first groove A

$x_2$ : center coordinate of second groove B

$z_1$ : center coordinate of first groove A

$z_2$ : center coordinate of second groove B

[Math. 6]

$$\alpha = \arccos\left(\frac{L^2 + A_1^2 - A_2^2}{2LA_1}\right)$$

When the angle formed by the straight line L5 passing through the coordinates $(X_1, Z_1)$ and parallel to the Z axis and the segment L1 is represented by $\theta$, the angle $\theta$ is expressed by Math. 7.

[Math. 7]

$$\theta = \arctan\left(\frac{x_1 - x_2}{z_1 - z_2}\right)$$

Accordingly, the X coordinate ($X_0$) of the coordinates ($X_0$, $Z_0$) is expressed by Math. 8, and the Y coordinate ($Y_0$) thereof is expressed by Math. 9.

[Math. 8]

$$X_0 = X_1 + A_1 \cos\left(\frac{\pi}{2} - \theta - \alpha\right)$$

$$X_0 : \text{steel ball center coordinate}$$

[Math. 9]

$$Z_0 = Z_1 + A_1 \sin\left(\frac{\pi}{2} - \theta - \alpha\right)$$

$$Z_0 : \text{steel ball center coordinate}$$

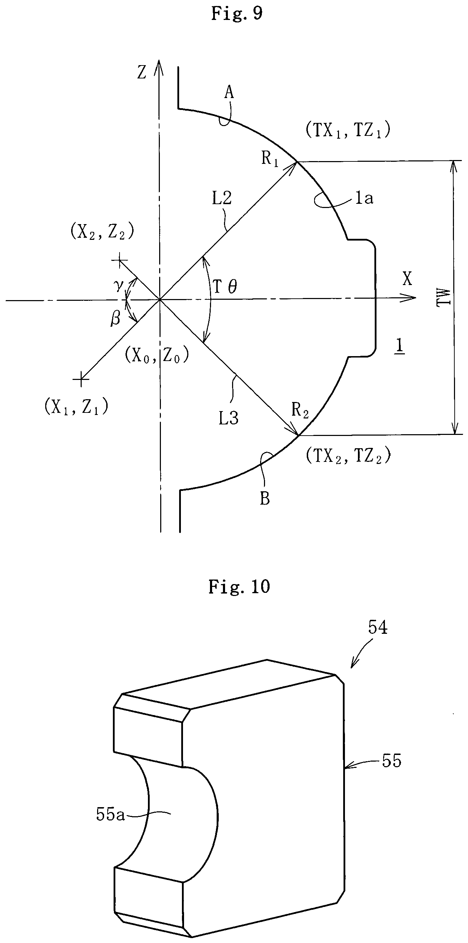

As illustrated in FIG. 9, when the angle formed by the segment L2 passing through the coordinates ($X_1$, $Z_1$) and the coordinates ($X_0$, $Z_0$) and the X axis is represented by β, the angle β is expressed by Math. 10. Further, when the angle formed by the segment L3 passing through the coordinates ($X_2$, $Z_2$) and the coordinates ($X_0$, $Z_0$) and the X axis is represented by γ, the angle γ is expressed by Math. 11.

[Math. 10]

$$\beta = \arctan\left(\frac{Z_0 - Z_1}{X_0 - X_1}\right)$$

[Math. 11]

$$\gamma = \arctan\left(\frac{Z_0 - Z_2}{X_0 - X_2}\right)$$

The contact coordinate $TX_1$ of the first groove A (X-coordinate value of intersection between segment L2 and first groove A) is expressed by Math. 12, and the contact coordinate $TZ_1$ of the first groove A (Z-coordinate value of intersection between segment L2 and first groove A) is expressed by Math. 13.

[Math. 12]

$$TZ_1 = Z_1 + R_1 \sin(\beta)$$

$$TZ_1 : \text{contact coordinate of first groove A}$$

[Math. 13]

$$TX_1 = x_1 + R_1 \cos(\beta)$$

$TX_1$ : contact coordinate of first groove A

The contact coordinate $TX_2$ of the second groove B (X-coordinate value of intersection between segment L3 and second groove B) is expressed by Math. 15, and the contact coordinate $TZ_2$ of the second groove B (Z-coordinate value of intersection between segment L3 and second groove B) is expressed by Math. 14.

[Math. 14]

$$TZ_2 = z_2 + R_2 \sin(\gamma)$$

$TZ_2$ : contact coordinate of second groove B

[Math. 15]

$$TX_2 = x_2 + R_2 \cos(\gamma)$$

$TX_2$ : contact coordinate of second groove B

Accordingly, the contact width TW may be determined as expressed by Math. 16, and the contact angle $T\theta$ may be determined as expressed by Math. 17.

[Math. 16]

$$TW = \sqrt{(TZ_1 - TZ_2)^2 + (TX_1 - TX_2)^2}$$

TW : contact width

[Math. 17]

$$T\theta = \deg\left[\arccos\left(\frac{2R_0^2 - TW^2}{2R_0^2}\right)\right]$$

$T\theta$ : contact angle

Note that, the calibration value ($\alpha$) of the electric micrometer needs to be determined depending on the distance from the turning center (turning radius). It is therefore preferred that the bearing track groove measurement device comprise relationship calibration means 54 for the turning center and the detection value of the displacement sensor 11. In this case, as the relationship calibration means 54, a model 55 having a recessed groove 55a as illustrated in FIG. 10 is formed, and the model 55 is used for calibration. Note that, a planar model may be used as the relationship calibration means 54.

According to the present invention, while the displacement sensor 11 is turned about the groove center O of the cross-section of the bearing track groove 1a, the radius value corresponding to the dimension from the turning center O to the groove bottom surface may be detected. In this way, the radius values of the entire cross-sectional profile of the bearing track groove 1a may be determined. Further, the turning angle of the displacement sensor 11 at each of the radius values may be detected. Consequently, the profile waveform of the bearing track groove 1a may be calculated based on the radius value and the turning angle. Besides, the load on the displacement sensor 11 may be suppressed to be small. Consequently, the profile of the bearing track groove 1a may be measured with high precision because the profile waveform of the bearing track groove 1a may be calculated based on the radius value and the turning angle, and in addition, the load on the displacement sensor 11 may be suppressed to be small.

According to the bearing track groove measurement device comprising the fixing means 20 comprising the clamp mechanism 22, the workpiece S may be clamped through the adjustment of the clamp width in a state in which the workpiece S is fixed at a predetermined placement position, which eliminates the need for moving the workpiece S. Consequently, the profile of the bearing track groove 1a may be stably measured with high precision even for a large-sized workpiece S that is difficult to move.

According to the bearing track groove measurement device comprising the groove fitting element 30 as the fixing means 20, when the groove fitting element 30 is fitted into the bearing track groove 1a, the sensor 11 may be stably positioned to perform more highly-precise measurement.

According to the bearing track groove measurement device comprising the floating structure 33 capable of displacing the groove fitting element 30 in the vertical direction, the groove fitting element 30 is stably fitted into the bearing track groove 1a. In the illustrated example, the spring member 36 is used as the floating structure 33, but an actuator mechanism may be used without using the spring member 36. In this case, the actuator is configured to convert input energy into a physical motion, and is a mechanical element constructing a mechanical/electrical circuit. The actuator is actively actuated or driven. Further, the actuator is a drive device for moving an object and a mechanical or hydraulic/pneumatic device for performing control in response to the operation of the drive device. The types of actuator include an actuating cylinder (hydraulic cylinder, pneumatic cylinder, and electric cylinder), a linear actuator (reciprocating drive device with a linear motor), and a rubber actuator (reciprocating drive device utilizing deformation of rubber tube caused by pressurization and depressurization).

The floating structure 33 may be constructed by the spring member 36 or the actuator mechanism, and hence the degree of freedom of design of the device is increased to realize a device that is easy to design.

When the groove fitting element 30 is constructed by the steel ball 31, the groove fitting element 30 may be stably fitted into the bearing track groove 1a. More precise positioning may be performed. Besides, the steel ball 31 is excellent in strength and rigidity and may be used for a long time, which may reduce the cost.

Next, FIG. 12 illustrates a state in which a cross-sectional profile of the track groove 2a of the inner race 2 is measured. In this case, the amount of protrusion of the steel ball support portion 38 of the support member 35 is increased as compared with the device for measuring the cross-sectional profile of the track groove 1a of the outer race 1 illustrated in FIG. 3. Thus, it is only necessary that the steel ball support portions 38 have an extendable structure, or that the steel ball support portions 38 having different lengths be prepared and replaced depending on the workpiece to be measured (outer race 1 or inner race 2) or the like.

As illustrated in FIG. 12, when this device is set on the inner race 2 while the steel ball serving as the groove fitting element is fitted into the track groove 2a of the inner race 2, the radius values of the entire cross-sectional profile of the bearing track groove may be determined similarly to the case of the outer race 1. Further, the turning angle of the displacement sensor at each of the radius values may be detected. Consequently, the profile waveform of the bearing track groove may be calculated based on the radius value and the turning angle.

Incidentally, in the embodiment, the track groove has a Gothic circular profile, but even when the track groove has a single circular profile or a double curvature circular profile, the radius values of the entire cross-sectional profile of the bearing track groove may be determined, and the turning angle of the displacement sensor at each of the radius values may be detected. Consequently, the profile waveform of the bearing track groove may be calculated based on the radius value and the turning angle.

In the embodiment, the electric micrometer is used as the displacement sensor 11, but another sensor, for example, a laser displacement sensor may be used. In this case, the laser displacement sensor is constructed by a combination of a light emitting element and a light receiving element, and a semiconductor laser is used as the light emitting element. Light from the semiconductor laser is condensed through a transmitter lens to irradiate a measurement target. Then, a part of light beams diffused and reflected from the target pass through a receiver lens to form a spot on the light receiving element. The spot moves along with the movement of the target, and hence the amount of displacement to the target may be known through the detection of the position of the spot.

The electric micrometer employs a method of electrically magnifying a mechanical minute displacement, and hence the use of the electric micrometer as a detection sensor enables precise measurement with excellent respon-

**EP 2 891 866 B1**

siveness and may reduce the cost as well. Further, because the laser displacement sensor is a non-contact sensor, the use of the electric micrometer as a detection sensor may effectively prevent the workpiece from being scratched in measurement.

While what has been described above is the embodiment of the present invention, the present invention is not intended to be limited to the embodiment and various modifications may be made. In the embodiment, the workpiece to be measured is an outer race or an inner race of a single row bearing, but may be an outer race or an inner race of a double row bearing. Further, an eddy current displacement sensor, an ultrasonic displacement sensor, or the like may be used as the displacement sensor. The scope of the invention is defined by the appended claims.

Industrial Applicability

The profile waveform of the bearing track groove is calculated based on the radius value detected by the displacement sensor and the turning angle at the radius value detected by the turning angle detection means. Consequently, the profile of the bearing track groove may be measured with high precision. As the bearing track groove, the cross-sectional profile may be a single circular profile, a Gothic circular profile, or a double curvature circular profile.

Reference Signs List

| | |
|---|---|
| 1a | track groove (outer raceway surface) |
| 1 | outer race |
| 2a | track groove (inner raceway surface)) |
| 2 | inner race |
| 11 | displacement sensor |
| 12 | turning angle detection means |
| 13 | calculation means |
| 20 | fixing means |
| 21 | positioning means |
| 22 | clamp mechanism |
| 30 | fitting element |
| 31 | steel ball |
| 33 | floating structure |
| 36 | spring member |
| 37 | substrate portion |
| 54 | relationship calibration means |
| 55 | model |
| S | workpiece |

**Claims**

1. A bearing track groove measurement device for measuring a cross-sectional profile of a bearing track groove (1a), (2a), the device comprising:

fixing means (20) for fixing a workpiece (S) having the bearing track groove (1a), (2a), a displacement sensor (11) for detecting, by turning about a groove center of a cross-section of the bearing track groove (1a), (2a), a radius value corresponding to a dimension from a turning center thereof to a groove bottom surface;
turning angle detection means (12) for detecting a turning angle at the radius value detected by the displacement sensor (11); and
calculation means (13) for calculating a profile waveform of the bearing track groove (1a), (2a) based on the radius value detected by the displacement sensor (11) and the turning angle detected by the turning angle detection means (12),
**characterized in that** the fixing means (20) comprises a clamp mechanism (22) for clamping the workpiece (S) by adjusting a clamp width in a state in which the workpiece (S) is fixed at a predetermined placement position, wherein the clamp mechanism (22) comprises a substrate (25) and a clamp member (26) mounted on a lower surface of the substrate (25), wherein the clamp member (26) comprises a pair of gripping pieces (26a), (26b).

**2.** The bearing track groove measurement device according to claim 1 further comprising
positioning means (21) for positioning the displacement sensor (11),
wherein the positioning means (21) comprises a groove fitting element (30) comprising a steel ball (31) to be fitted into the bearing track groove (1a), (2a), and a floating structure (33) including a spring member (36) capable of displacing the groove fitting element (30) in a vertical direction, and
wherein the displacement sensor (11) is positionable by the positioning means (21) comprising the groove fitting element (30) being fitted into the bearing track groove (1a), (2a).

**3.** The bearing track groove measurement device according to claim 2,
wherein the workpiece (S) having the track groove (1a) has the bearing track groove (1a) formed in a radially inner surface thereof, and
wherein the groove fitting element (30) is configured to be fitted into the bearing track groove (1a) from a radially inner side of the workpiece.

**4.** The bearing track groove measurement device according to claim 2,
wherein the workpiece (S) having the bearing track groove (2a) has the bearing track groove (2a) formed in a radially outer surface thereof, and
wherein the groove fitting element (30) is configured to be fitted into the bearing track groove (2a) from a radially outer side of the workpiece.

**5.** The bearing track groove measurement device according to claim 3 or 4, wherein the calculation means (13) are configured to calculate for the cross-sectional profile of the bearing track groove (1a), (2a), a radius value of the groove and groove center coordinates by circular approximation with use of a least squares method.

**6.** The bearing track groove measurement device according to claim 5, wherein the cross-sectional profile of the bearing track groove (1a), (2a) has a gothic circular profile including a first groove (A) and a second groove (B) having different center coordinates, and the calculation means are configured to create a virtual circle (50) that contacts with the first groove and the second groove respectively at one contact point, based on the calculated radius value of the bearing track groove (1a), (2a) and the calculated groove center coordinates.

**7.** The bearing track groove measurement device according to claim 6, wherein the calculation means are configured to calculate an angle formed by the contact points with the calculated groove center coordinates.

**8.** The bearing track groove measurement device according to claim 6, wherein the calculation means are configured to calculate a distance from the contact points to the calculated groove center coordinates.

**9.** The bearing track groove measurement device according to any one of claims 1 to 8, further comprising relationship calibration means (54) for the turning center and a detection value of the displacement sensor (11),
wherein a groove profile model is used as the relationship calibration means (54).

**10.** A bearing track groove measurement method for measuring a cross-sectional profile of a bearing track groove (1a), (2a), comprising:

a clamping step of clamping a workpiece (S) by adjusting a clamp width while having the workpiece (S) having the bearing track groove (1a), (2a) fixed at a predetermined placement position, by using a clamp mechanism (22) comprising a substrate (25) and a clamp member (26) mounted on a lower surface of the substrate (25), wherein the clamp member (26) comprises a pair of gripping pieces (26a), (26b);
a radius detection step of detecting, by a displacement sensor (11) for turning about a groove center of a cross-section of the bearing track groove (1a), (2a), a radius value corresponding to a dimension from a turning center thereof to a groove bottom surface;
a turning angle detection step of detecting a turning angle at the radius value detected by the displacement sensor (11); and
a calculation step of calculating a profile waveform of the bearing track groove (1a), (2a) based on the radius value detected by the displacement sensor (11) and the turning angle at the radius value, which is detected in the turning angle detection step.

**11.** The bearing track groove measurement method according to claim 10, further comprising
a positioning step of positioning the displacement sensor (11) by fitting a groove fitting element (30) including a steel ball (31) into the bearing track groove (1a), (2a),
wherein displacement of the groove fitting element (30) to be fitted into the bearing track groove (1a), (2a) in a vertical direction is enabled by a floating structure (33) including a spring member (36).

**Patentansprüche**

1. Lagerlaufbahnnut-Messvorrichtung zum Messen eines Querschnittprofils einer Lagerlaufbahnnut (1a), (2a), wobei die Vorrichtung Folgendes umfasst:

   Befestigungsmittel (20) zum Befestigen eines Werkstücks (S), das die Lagerlaufbahnnut (1a), (2a) aufweist, einen Verschiebungssensor (11) zum Detektieren, durch Drehen um einen Nutmittelpunkt eines Querschnitts der Lagerlaufbahnnut (1a), (2a), eines Radiuswerts, der einer Abmessung von einem Drehmittelpunkt davon zu einer Nutbodenfläche entspricht;
   Drehwinkeldetektionsmittel (12) zum Detektieren eines Drehwinkels mit dem durch den Verschiebungssensor (11) detektierten Radiuswert; und
   Berechnungsmittel (13) zum Berechnen einer Profilwellenform der Lagerlaufbahnnut (1a), (2a) basierend auf dem durch den Verschiebungssensor (11) detektierten Radiuswert und dem durch die Drehwinkeldetektionsmittel (12) detektierten Drehwinkel, **dadurch gekennzeichnet, dass** die Befestigungsmittel (20) einen Einspannmechanismus (22) zum Einspannen des Werkstücks (S) umfassen, indem in einem Zustand, in dem das Werkstück (S) an einer vorbestimmten Platzierungsposition befestigt ist, eine Einspannbreite eingestellt wird, wobei der Einspannmechanismus (22) ein Substrat (25) und ein an einer unteren Oberfläche des Substrats (25) montiertes Einspannglied (26) umfasst, wobei das Einspannglied (26) ein Paar Greifstücke (26a), (26b) umfasst.

2. Lagerlaufbahnnut-Messvorrichtung nach Anspruch 1, ferner umfassend:

   Positionierungsmittel (21) zum Positionieren des Verschiebungssensors (11),
   wobei die Positionierungsmittel (21) Folgendes umfassen: ein Nuteinpasselement (30), das eine in die Lagerlaufbahnnut (1a), (2a) einzupassende Stahlkugel (31) umfasst, und eine Schwebestruktur (33), die ein Federglied (36) beinhaltet, das imstande ist, das Nuteinpasselement (30) in einer vertikalen Richtung zu verschieben, und
   wobei der Verschiebungssensor (11) durch die Positionierungsmittel (21) positionierbar ist, die das Nuteinpasselement (30) umfassen, das in die Lagerlaufbahnnut (1a), (2a) eingepasst ist.

3. Lagerlaufbahnnut-Messvorrichtung nach Anspruch 2,
   wobei bei dem Werkstück (S), das die Laufbahnnut (1a) aufweist, die Lagerlaufbahnnut (1a) in einer radial inneren Oberfläche davon gebildet ist, und
   wobei das Nuteinpasselement (30) dafür ausgelegt ist, von einer radial inneren Seite des Werkstücks in die Lagerlaufbahnnut (1a) eingepasst zu werden.

4. Lagerlaufbahnnut-Messvorrichtung nach Anspruch 2,
   wobei bei dem Werkstück (S), das die Lagerlaufbahnnut (2a) aufweist, die Lagerlaufbahnnut (2a) in einer radial äußeren Oberfläche davon gebildet ist, und
   wobei das Nuteinpasselement (30) dafür ausgelegt ist, von einer radial äußeren Seite des Werkstücks in die Lagerlaufbahnnut (2a) eingepasst zu werden.

5. Lagerlaufbahnnut-Messvorrichtung nach Anspruch 3 oder 4,
   wobei die Berechnungsmittel (13) dafür ausgelegt sind, für das Querschnittprofil der Lagerlaufbahnnut (1a), (2a) einen Radiuswert der Nut und Nutmittelpunktkoordinaten durch Kreisapproximation unter Verwendung einer Methode der kleinsten Quadrate zu berechnen.

6. Lagerlaufbahnnut-Messvorrichtung nach Anspruch 5, wobei das Querschnittprofil der Lagerlaufbahnnut (1a), (2a) ein gotisches Kreisprofil aufweist, das eine erste Nut (A) und eine zweite Nut (B) beinhaltet, die unterschiedliche Mittelpunktkoordinaten aufweisen, und die Berechnungsmittel dafür ausgelegt sind, basierend auf dem berechneten Radiuswert der Lagerlaufbahnnut (1a), (2a) und den berechneten Nutmittelpunktkoordinaten einen virtuellen Kreis (50) zu erzeugen, der die erste Nut und die zweite Nut jeweils an einem Kontaktpunkt berührt.

7. Lagerlaufbahnnut-Messvorrichtung nach Anspruch 6, wobei die Berechnungsmittel dafür ausgelegt sind, einen Winkel zu berechnen, der durch die Kontaktpunkte mit den berechneten Nutmittelpunktkoordinaten gebildet wird.

8. Lagerlaufbahnnut-Messvorrichtung nach Anspruch 6, wobei die Berechnungsmittel dafür ausgelegt sind, eine Entfernung von den Kontaktpunkten zu den berechneten Nutmittelpunktkoordinaten zu berechnen.

9. Lagerlaufbahnnut-Messvorrichtung nach einem der Ansprüche 1 bis 8, ferner umfassend Beziehungskalibrierungsmittel (54) für den Drehmittelpunkt und einen Detektionswert des Verschiebungssensors (11), wobei ein Nutprofilmodell als Beziehungskalibrierungsmittel (54) verwendet wird.

10. Lagerlaufbahnnut-Messverfahren zum Messen eines Querschnittprofils einer Lagerlaufbahnnut (1a), (2a), umfassend:

einen Einspannschritt des Einspannens eines Werkstücks (S) durch Einstellen einer Einspannbreite, während das Werkstück (S), das die Lagerlaufbahnnut (1a), (2a) aufweist, an einer vorbestimmten Platzierungsposition befestigt ist, indem ein Einspannmechanismus (22) verwendet wird, der ein Substrat (25) und ein an einer unteren Oberfläche des Substrats (25) montiertes Einspannglied (26) umfasst, wobei das Einspannglied (26) ein Paar Greifstücke (26a), (26b) umfasst;
einen Radiusdetektionsschritt des Detektierens, durch einen Verschiebungssensor (11) zum Drehen um einen Nutmittelpunkt eines Querschnitts der Lagerlaufbahnnut (1a), (2a), eines Radiuswerts, der einer Abmessung von einem Drehmittelpunkt davon zu einer Nutbodenfläche entspricht;
einen Drehwinkeldetektionsschritt des Detektierens eines Drehwinkels mit dem durch den Verschiebungssensor (11) detektierten Radiuswert; und
einen Berechnungsschritt des Berechnens einer Profilwellenform der Lagerlaufbahnnut (1a), (2a) basierend auf dem durch den Verschiebungssensor (11) detektierten Radiuswert und dem Drehwinkel mit dem Radiuswert, der in dem Drehwinkeldetektionsschritt detektiert wird.

11. Lagerlaufbahnnut-Messverfahren nach Anspruch 10, ferner umfassend:

einen Positionierungsschritt des Positionierens des Verschiebungssensors (11) durch Einpassen eines Nuteinpasselements (30), das eine Stahlkugel (31) beinhaltet, in die Lagerlaufbahnnut (1a), (2a),
wobei die Verschiebung des in die Lagerlaufbahnnut (1a), (2a) einzupassenden Nuteinpasselements (30) in einer vertikalen Richtung durch eine Schwebestruktur (33) ermöglicht wird, die ein Federglied (36) beinhaltet.

## Revendications

1. Dispositif de mesure de gorge de piste de roulement pour mesurer un profil en coupe transversale d'une gorge de piste de roulement (1a), (2a), le dispositif comprenant :

un moyen de fixation (20) pour fixer une pièce à travailler (S) ayant la gorge de piste de roulement (1a), (2a),
un capteur de déplacement (11) pour détecter, en tournant autour d'un centre de gorge d'une section en coupe transversale de la gorge de piste de roulement (1a), (2a), une valeur de rayon correspondant à une dimension d'un centre de rotation de celle-ci à une surface inférieure de gorge ;
un moyen de détection d'angle de braquage (12) pour détecter un angle de braquage au niveau de la valeur de rayon détectée par le capteur de déplacement (11) ; et
un moyen de calcul (13) pour calculer une forme d'onde de profil de la gorge de piste de roulement (1a), (2a) sur la base de la valeur de rayon détectée par le capteur de déplacement (11) et de l'angle de braquage détecté par le moyen de détection d'angle de braquage (12), **caractérisé en ce que** le moyen de fixation (20) comprend un mécanisme de serrage (22) pour serrer la pièce à travailler (S) en ajustant une largeur de serrage dans un état dans lequel la pièce à travailler (S) est fixée à une position de placement prédéterminée, dans lequel le mécanisme de serrage (22) comprend un substrat (25) et un élément de serrage (26) monté sur une surface inférieure du substrat (25), dans lequel l'élément de serrage (26) comprend une paire de pièces de serrage (26a), (26b).

2. Dispositif de mesure de gorge de piste de roulement selon la revendication 1, comprenant en outre
un moyen de positionnement (21) pour positionner le capteur de déplacement (11),
dans lequel le moyen de positionnement (21) comprend un élément d'assemblage de gorge (30) comprenant une bille en acier (31) destinée à être assemblée dans la gorge de piste de roulement (1a), (2a), et

une structure flottante (33) comportant un élément ressort (36) capable de déplacer l'élément d'assemblage de gorge (30) dans une direction verticale, et

dans lequel le capteur de déplacement (11) peut être positionné par le moyen de positionnement (21) comprenant l'élément d'assemblage de gorge (30) étant assemblé dans la gorge de piste de roulement (1a), (2a).

**3.** Dispositif de mesure de gorge de piste de roulement selon la revendication 2,

dans lequel la pièce à travailler (S) ayant la gorge de piste (1a) a la gorge de piste de roulement (1a) formée dans une surface radialement interne de celle-ci, et

dans lequel l'élément d'assemblage de gorge (30) est conçu pour être assemblé dans la gorge de piste de roulement (1a) à partir d'un côté radialement interne de la pièce à travailler.

**4.** Dispositif de mesure de gorge de piste de roulement selon la revendication 2,

dans lequel la pièce à travailler (S) ayant la gorge de piste de roulement (2a) a la gorge de piste de roulement (2a) formée dans une surface radialement externe de celle-ci, et

dans lequel l'élément d'assemblage de gorge (30) est conçu pour être assemblé dans la gorge de piste de roulement (2a) à partir d'un côté radialement externe de la pièce à travailler.

**5.** Dispositif de mesure de gorge de piste de roulement selon la revendication 3 ou 4, dans lequel le moyen de calcul (13) est configuré pour calculer, pour le profil en coupe transversale de la gorge de piste de roulement (1a), (2a), une valeur de rayon des coordonnées de la gorge et du centre de la gorge par approximation circulaire en utilisant une méthode des moindres carrés.

**6.** Dispositif de mesure de gorge de piste de roulement selon la revendication 5, dans lequel le profil en coupe transversale de la gorge de piste de roulement (1a), (2a) a un profil circulaire gothique comportant une première gorge (A) et une seconde gorge (B) ayant des coordonnées centrales différentes, et le moyen de calcul est configuré pour créer un cercle virtuel (50) qui entre en contact avec la première gorge et la seconde gorge respectivement en un point de contact, sur la base de la valeur de rayon calculée de la gorge de la piste de roulement (1a), (2a) et des coordonnées centrales de gorge calculées.

**7.** Dispositif de mesure de gorge de piste de roulement selon la revendication 6, dans lequel le moyen de calcul est configuré pour calculer un angle formé par les points de contact avec les coordonnées centrales de gorge calculées.

**8.** Dispositif de mesure de gorge de piste de roulement selon la revendication 6, dans lequel le moyen de calcul est configuré pour calculer une distance entre les points de contact et les coordonnées centrales de gorge calculées.

**9.** Dispositif de mesure de gorge de piste de roulement selon l'une quelconque des revendications 1 à 8, comprenant en outre un moyen d'étalonnage de relation (54) pour le centre de tournage et une valeur de détection du capteur de déplacement (11),

dans lequel un modèle de profil de gorge est utilisé comme le moyen d'étalonnage de relation (54).

**10.** Procédé de mesure de gorge de piste de roulement pour mesurer un profil en coupe transversale d'une gorge de piste de roulement (1a), (2a), comprenant :

une étape de serrage consistant à serrer une pièce à travailler (S) en ajustant une largeur de serrage tout en ayant la pièce à travailler (S) ayant la gorge de piste de roulement (1a), (2a) fixée à une position de placement prédéterminée, au moyen d'un mécanisme de serrage (22) comprenant un substrat (25) et un élément de serrage (26) monté sur une surface inférieure du substrat (25), dans lequel l'élément de serrage (26) comprend une paire de pièces de serrage (26a), (26b) ;

une étape de détection de rayon consistant à détecter, par un capteur de déplacement (11) pour tourner autour d'un centre de gorge d'une section en coupe transversale de la gorge de piste de roulement (1a), (2a), une valeur de rayon correspondant à une dimension à d'un centre de rotation de celle-ci à une surface inférieure de gorge ;

une étape de détection d'angle de braquage pour détecter un angle de braquage au niveau de la valeur de rayon détectée par le capteur de déplacement (11) ; et

une étape de calcul pour calculer une forme d'onde de profil de la gorge de piste de roulement (1a), (2a) sur la base de la valeur de rayon détectée par le capteur de déplacement (11) et de l'angle de braquage au niveau de la valeur de rayon, qui est détecté dans l'étape de détection d'angle de braquage.

**11.** Procédé de mesure de gorge de piste de roulement selon la revendication 10, comprenant en outre une étape de positionnement du capteur de déplacement (11) en assemblant un élément d'assemblage de gorge (30) comportant une bille en acier (31) dans la gorge de piste de roulement (1a), (2a), dans lequel un déplacement de l'élément d'assemblage de gorge (30) destiné à être assemblé dans la gorge de piste de roulement (1a), (2a) dans une direction verticale est autorisé par une structure flottante (33) comportant un élément ressort (36).

Fig. 1

```
                                    ┌──────────────┐
                                    │  WORKPIECE   │◄── S
                                    └──────┬───────┘
                                           │
                                           ▼
   ┌─────────────────┐  13      ┌──────────────────────┐  11
   │CALCULATION MEANS│◄─────────│  DISPLACEMENT SENSOR │◄──
   └─────────────────┘          └──────────┬───────────┘
                                           ▲
                                           │
                          ┌────────────────────────────────┐  12
                          │ TURNING ANGLE DETECTION MEANS  │◄──
                          └────────────────────────────────┘
```

Fig. 2

Fig. 3

Fig. 4

Fig. 5

Fig. 6

## Fig. 7

X COORDINATE

## Fig. 8

Fig. 9

Fig. 10

Fig. 11

Fig. 12

**EP 2 891 866 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 02284017 A

- JP 2992625 B